# EUROPEAN PATENT APPLICATION

(11) **EP 0 703 523 A1**
(43) Date of publication of application: **27.03.1996**
(21) Application number: 95306715.4
(22) Date of filing: 22.09.1995
(51) Int. Cl.: G06F 1/16

(54) **Palm rest for a data processing apparatus keyboard**

(30) Priority: 22.09.1994 JP 228295/94
(71) Applicant: International Business Machines Corporation, Armonk, N.Y. 10504 (US)
(72) Inventor: Horikoshi, Seita, Zama-shi, Kanagawa-ken (JP)
(74) Representative: Moss, Robert Douglas

(57) **Abstract**

Disclosed is a palm rest with a simple structure that can be stored in a lid of an electric device.

A palm rest 10 is supported rotatably at a case assembly 14 within which a keyboard 34 is mounted. By rotating the palm rest 10 outward, an operator can rest his palms on it, thus facilitating key manipulation. When the palm rest 10 is positioned upright, it is retained within a lid 18, which covers the keyboard 34. In this case, the palm rest 10 does not project outward from the PC 12 and the PC 12 can therefore be stored without difficulty. Since a gap is defined between the palm rest 10 and the front wall of the case assembly 14 when the palm rest 10 is rotated forward, a user can slip his fingers through the defined gap and grasp the palm rest 10, which then can serve as a handle for carrying the PC 12.

## Description

### Field of the Invention

The present invention relates to a palm rest on which a keyboard operator can rest their palms and by which it is possible to carry the keyboard or to carry a data processing apparatus including the keyboard.

### Background

A palm rest is provided for the keyboard of a data processing apparatus which both facilitates the carrying of the apparatus and improves the key input operation.

One such palm rest can be stored in a body of a case assembly wherein a keyboard is mounted. The type of palm rest that can be stored, which is generally called a sliding type, is mounted on a slide mechanism that is provided on a side wall, which extends from the front to the rear of the case assembly (the display side), and both ends of the palm rest are so supported on the slide that it can be extracted from and retracted within the case assembly.

However, since (1) the slide mechanism of a sliding type palm rest must be formed of a plastic that slides easily, (2) precise manufacturing is required, and (3) the number of parts comprising the palm rest increases, manufacturing costs increase accordingly. Since the slide mechanism must have a predetermined mechanical strength in order to be used as a handle for carrying the data processing apparatus, a slide mechanism can not be provided at the front side of the case assembly (the key operator side) and the palm rest must be lengthened in the direction of the width of the case assembly so that it extends to the area beyond the portion where the palms of a key operator are normally rested (the area beyond the typing key area).

Required is a simply structured palm rest that can be covered within the lid of a data processing apparatus and that does not have to extend beyond its usable length.

### Summary of the present invention

The present invention provides a palm rest and a data processing apparatus as set out in the attached claims.

A palm rest is installed into a data processing apparatus and is preferably rotatably hinged on shafts at a case assembly. The palm rest is capable of holding an operator's palms when rotated outward; is covered with the lid when the lid is closed; and forms a handle when rotated outward and the lid is closed.

The surface of a palm rest, on which surface the palms of an operator are to be rested, is preferably in the same plane as that formed by the keyboard.

A palm rest according to the invention is preferably hinged on the front of the casing.

A palm rest according to the invention is preferably held upright and is held in contact with the internal wall of the lid when the palm rest has been rotated inwardly and the lid is closed.

In a data processing apparatus according to the invention, a casing mounts a keyboard and a lid, and the apparatus further comprises a palm rest rotatably hinged on the casing which is capable of holding an operator's palms when rotated outward, which is storable in the lid when the lid is closed, and which forms a handle when the palm rest is rotated outward and the lid is closed.

A palm rest is thus preferably rotatably hinged on a case assembly within which a keyboard is mounted. When the palm rest is rotated outward, the palms of an operator can be rested on it, thus facilitating the key input operation. When lifted to an upright position, the palm rest can be stored in a lid that covers the keyboard so that it does not project outward from the data processing apparatus and does not enlarge the overall external dimensions of the apparatus.

A palm rest which is so designed that it can be rotated between its use position and its storage position, can have a simpler mechanism with fewer components than a palm rest that is slid in for storage, and such precise manufacturing is not required. Manufacturing costs can therefore be reduced.

Further, since the palm rest when rotated outward forms a gap between it and the front of the case assembly, a user can slip his fingers into the gap and while holding the palm rest use it as a handle by which to carry the data processing apparatus.

The surface of the palm rest by which the palms of a key input operator are supported, is preferably in the same plane as the surface of the keyboard. An operator can therefore input data while maintaining a natural posture.

The palm rest is preferably hinged on the front wall of the case assembly. Therefore, it is not necessary to support both ends of the palm rest at the side walls of the case assembly as is conventional. Also, an uneconomical arrangement where a palm rest is lengthened so that it extends beyond the typing key area is not required, and an economical design can be provided.

The palm rest is preferably held in contact with the internal wall of the lid by closing the lid while the palm rest is upright. The palm rest is therefore held securely when it is stored.

The palm rest can be tightly stored in the lid. In addition, since the palm rest does not project outward from the data processing apparatus when retracted, the apparatus can be stored in a desk drawer, etc. Further, by extracting the palm rest from the case assembly and using it as a handle, the data processing apparatus can be easily carried.

### Description of the Preferred Embodiments

The invention will now be described in more detail, by way of example, with reference to the accompanying drawings in which:

Fig. 1 is a general perspective view illustrating a PC (personal computer) on which a palm rest is installed according to one embodiment of the present invention.

Fig. 2 is a perspective view illustrating the state when the palm rest is used as a handle according to the embodiment of the present invention.

Fig. 3 is a perspective view illustrating the state when the palm rest is stored in a lid according to the embodiment of the present invention.

Fig. 4 is an exploded perspective view illustrating a case assembly to which a palm rest is attached according to the embodiment of the present invention.

Fig. 5 is a perspective view illustrating the structure of the attachment arrangement for the palm rest according to the embodiment of the present invention.

Fig. 6 is a cross section showing the attachment arrangement for the palm rest according to the embodiment of the present invention.

Fig. 7 is a side view showing how the palm rest is used according to the embodiment of the present invention.

Fig. 8 is a side view showing the pivoting function of the palm rest according to the embodiment of the present invention.

Fig. 9 is a partial cross section showing the state when the palm rest is stored in the lid according to the embodiment of the present invention.

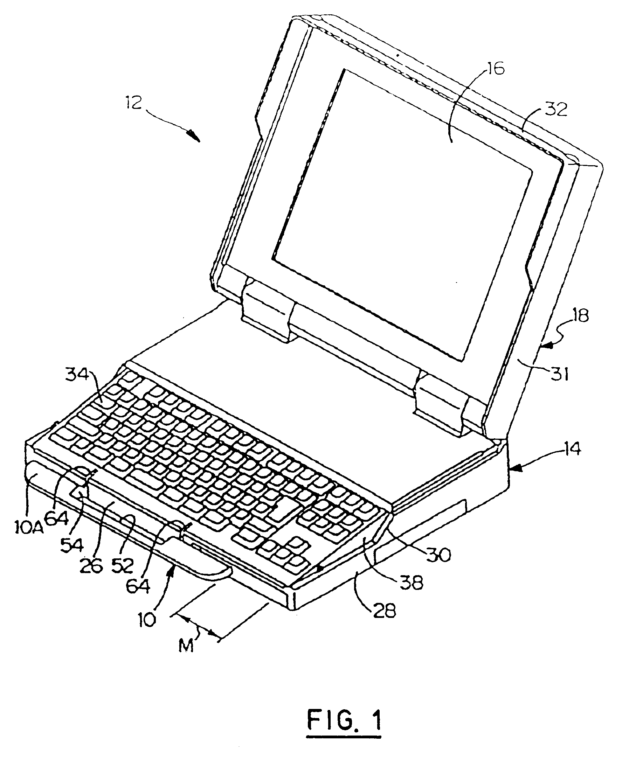

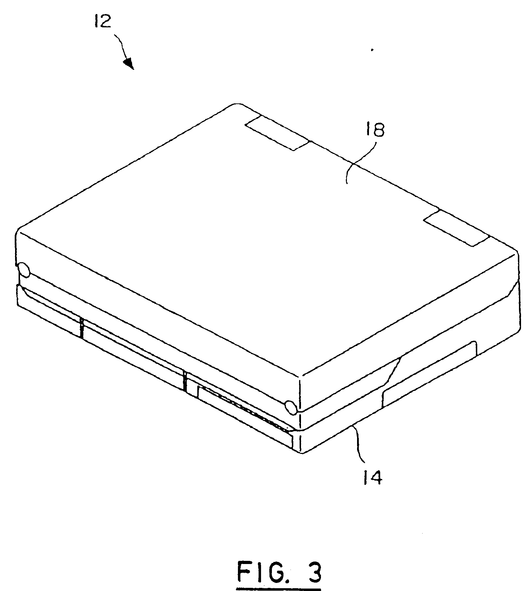

Figs. 1 through 3 illustrate a PC (Personal Computer) 12 to which a palm rest 10 is attached according to one embodiment of the present invention.

The PC 12 includes a rectangular case assembly 14 and a lid 18, which has a display 16 and which is so hinged on the case assembly 14 that it can be opened and closed.

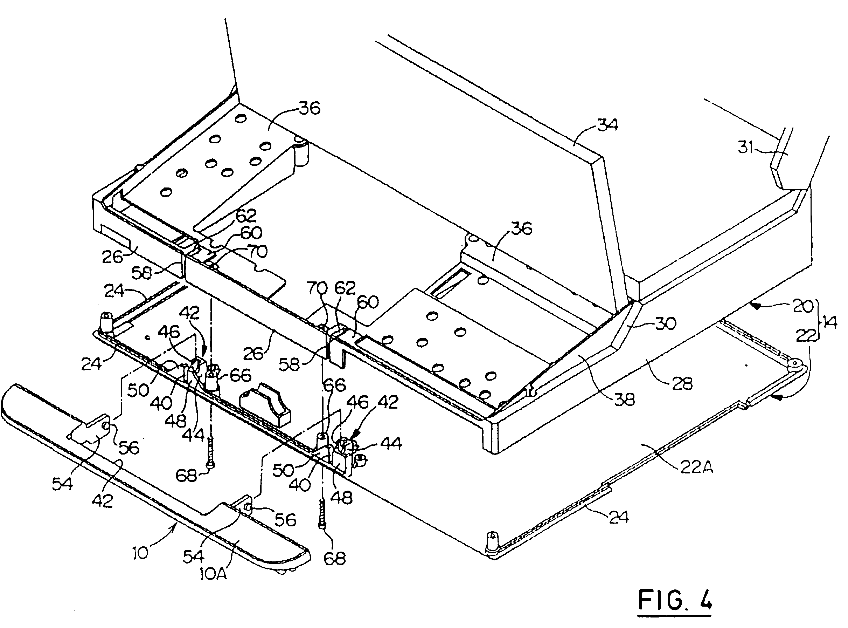

The case assembly 14 includes an upper case 20 and a lower case 22, as is shown in Fig. 4. Various packages and a battery that constitute the PC 12 are to be mounted on a base plate 22A of the lower case 22. Angle members 24 are located around the periphery of the base plate 22A. The angle members 24 engage the bottom ends of a front wall 26 and side walls 28, which are formed by folding the peripheral portions of the upper case 20 downward, so that a hollow storage portion is defined between the upper case 20 and the lower case 22.

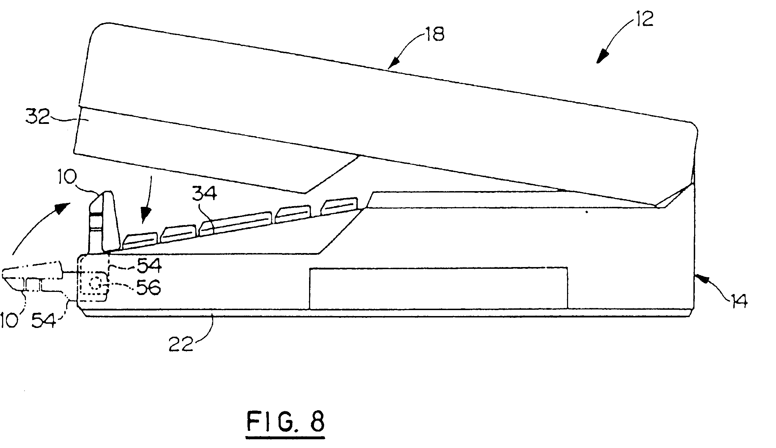

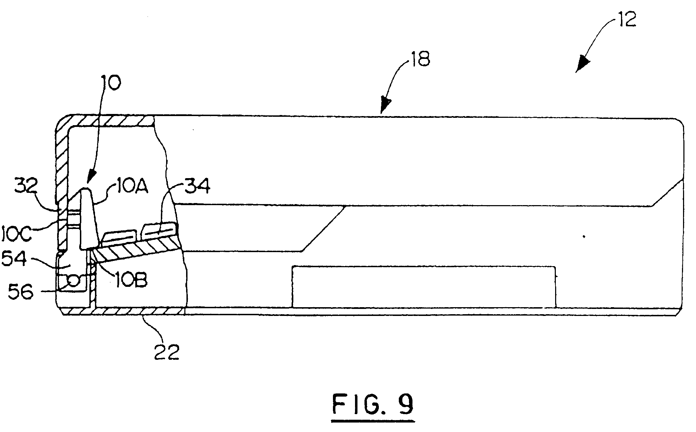

The side walls 28 of the upper case 20 have two levels, one runs from the center toward the rear and the other, which is lower, runs from the center toward the front. A slope 30 is formed at the center of the side walls 28 to communicate with those two levels. The upper edge of the thus structured side wall 28 contacts a circumferential wall 31 of the lid 18 when the lid 14 is closed. An auxiliary frame 32, which has a U-shaped form in Fig. 9, is provided at the free end of the circumferential wall 31. The lower edge of the auxiliary frame 32 abuts upon the lower levels of the side walls 28 and upon the slopes 30, so that between the lid 18 and a keyboard 34 is formed the storage space wherein the palm rest 10, which will be described later, is stored at the side that faces an operator (see Fig. 8).

Inclined support plates 36 are installed from the midline of the upper case 20 to the front. To cover gaps that appear due to the inclination, a triangular plate 38 is provided at the inside of each side wall 28. As the keyboard 34 is attached to the inclined support plates 36, the keyboard 34 is inclined toward an operator to facilitate key input manipulation.

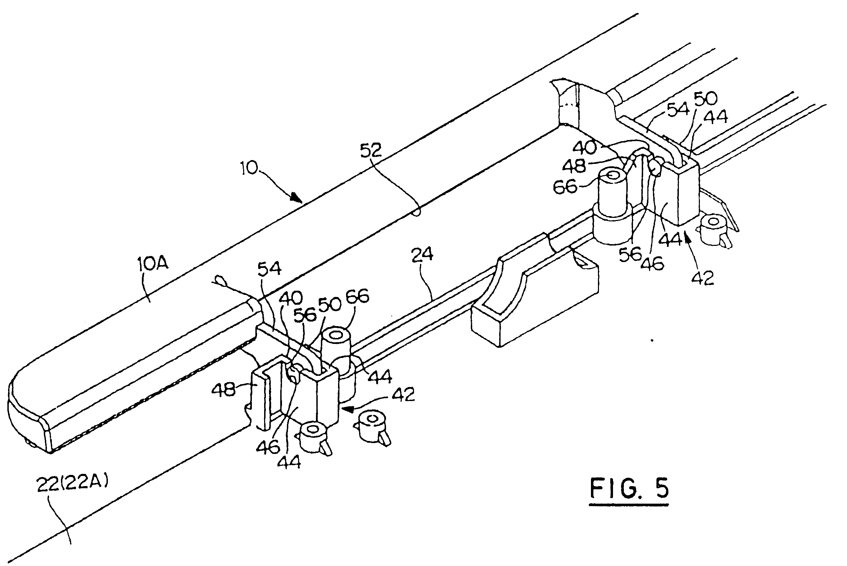

As is shown in Figs. 4 and 5, slits 40 are formed on the front side of the base board 22A of the lower case 22, and shaft receiving members 42 that have openings at the top respectively are arranged at a predetermined interval. Each of the upper edges of each leg plate 44 of the shaft receiving members 42 is notched to form a semicircular shaft receiving groove 46. Ribs 48 and 50 are projected from the base board 22A on both sides of each of the slits 40 to ensure the rigidity of the shaft receiving members 42.

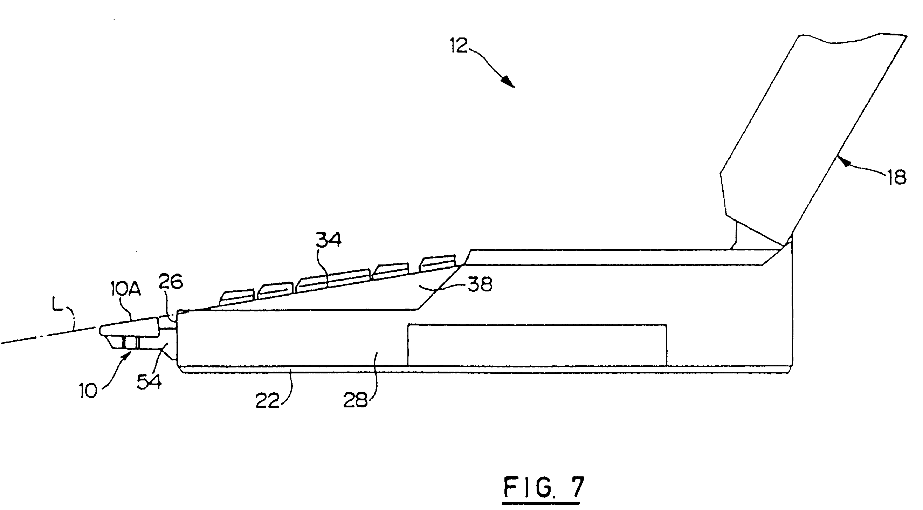

The palm rest 10, a long plate, is so designed that when it is rotated forward, a support face 10A is formed that has the same inclination angle as that of the keyboard 34 (see Fig. 7). The center portion of the palm rest 10 is notched to form a rectangular handhold 52 that a user grasps.

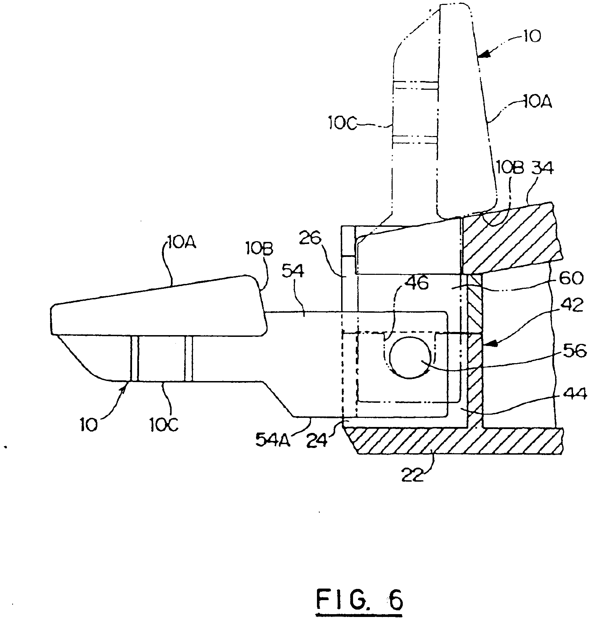

From the longitudinal ends of the handhold 52, plate arms 54 extend in a direction that is perpendicular to the palm rest 10. Shaft pins 56 are integrally formed at the end of each arm 54 and project outward from both sides of the arms 54. When the arms 54 are inserted into the shaft receiving members 42 through the slits 40, as is shown in Fig. 5, the arms 54 are supported by the shaft receiving grooves 46, which are formed in the leg plates 44. Further, as is shown in Fig. 6, when the palm rest 10 is rotated forward, bottom faces 54A of the arms 54 abut upon the angle member 24 to restrict the rotation of the palm rest 54, and the support face 10A is so positioned that it becomes an extension of the surface of the keyboard 34.

As is shown in Figs. 8 and 9, the palm rest 10 is so designed and sized that when it is upright, a rear face 10B contacts the top surface of the keyboard 34, the bottom face 10C abuts upon the internal wall of the auxiliary frame 32 of the lid 18, and the palm rest 10 is securely held.

When the upper case 20 is attached to the lower case 22, vertical slits 58 are formed in the front wall 26 of the upper case 20 at positions that correspond to those of the slits 40 in the shaft receiving members 42. Horizontal slits 62 are formed in pressure plates 60, which extend inward horizontally from the front wall 26, and communicate with the respective vertical slits 58. Further, slits 64 (see Fig. 1) that correspond to the horizontal slits 62 are also formed in the operator side of the keyboard 34.

As is shown in Fig. 6, the shaft pins 56 that are supported by the respective shaft receiving grooves 46 are pressed down by the pressure plates 60. Further, the vertical slits 58, the horizontal slits 62, and the slits 64 permit the palm rest 10 to be pivoted from the reclined state to the upright state at the shaft receiving pins 56.

In addition, as is shown in Figs. 4 and 5, bosses 66 that are open at both ends are provided on the base board 22A of the lower case 22. Screws 68 are inserted from the bottom of the base board 22A and engage respective internal threads 70 provided on the upper case 20 to partially secure the upper and lower cases 20 and 22.

The function of the palm rest according to the present invention will now be explained.

As is shown in Figs. 1 and 7, when the PC 12 is used, the lid 18 is opened and the palm rest 10 is rotated forward. The bottom faces 54A of the arms 54 contact the angle members 24 of the lower case 22 and hold the palm rest 10 in the reclined position (see Fig. 6). As the support face 10A of the palm rest 10 and the surface of the keyboard 34 lie in an identical plane L, an operator can assume a comfortable posture while manipulating the keys.

Further, since the palm rest 10 is hinged on the front wall 26 of the case assembly 14, it is not necessary for both ends of the palm rest to be supported by using the side walls of the case assembly as done conventionally, and it is also not necessary to extend the palm rest into an area M that lies beyond the typing key area.

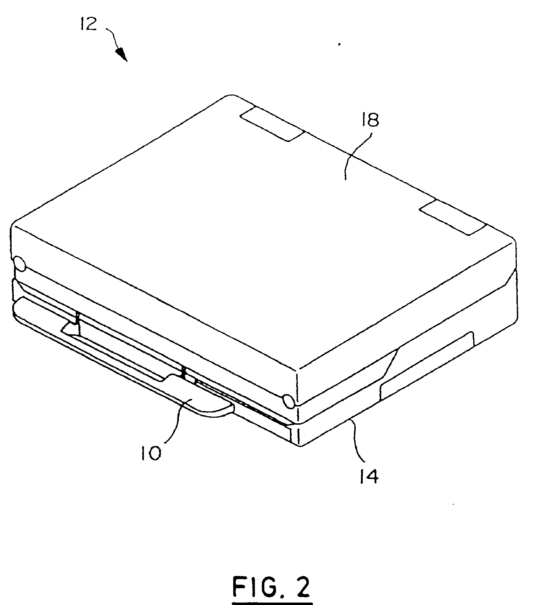

To carry the PC 12 to another place, the lid 18 is closed while the palm rest 10 is in the reclined position, as is shown Fig. 2. The palm rest 10 can then serve as a handle. A user may slip his fingers under the handhold 52 and while holding it carry the PC 12.

To store the PC 12 in a desk drawer, etc., the palm rest 10 is rotated toward the shaft pin 56 until it is upright. Then, when the rear face 10B of the palm rest 10 contacts the top face of the keyboard 34 the rotation is stopped.

When the lid 18 is closed, the internal wall of the auxiliary frame 32 contacts the bottom face 10C of the palm rest 10 and the palm rest 10 is held securely.

The employment of the structure whereby the palm rest 10 is pivoted simplifies the mechanism and reduces the number of required items, and does not require precise manufacturing. Therefore, the manufacturing costs can be reduced.

The present invention with the above described arrangement can be employed as a palm rest and as a handle for carrying a data processing apparatus. Since the palm rest is so designed that by being pivoted upward it can be securely stored within the lid of a data processing apparatus, it will not project outward from the data processing apparatus, and will not expand the footprint of the apparatus. In addition, because of the employment of a palm rest that can be rotated, the structure of the apparatus is simple. Further, as the palm rest is hinged on the front wall of the case assembly of a data processing apparatus, the palm rest does not have to be lengthened more than is necessary for its use as a typing aid.

## Claims

1. A data processing apparatus having a casing, an openable and closeable lid, and a keyboard mounted to the casing, characterised in that a palm rest is pivotally attached to said apparatus so as to be rotatable inwardly and outwardly relative to the casing, said palm rest being capable of holding an operator's palms when rotated outward, being storable in said lid when said lid is closed, and forming a handle when said palm rest is rotated outward and said lid is closed.

2. A data processing apparatus according to Claim 1, wherein the palm rest has a palm-supporting surface which is substantially planar with the keyboard when the palm rest is rotated outwardly into a position for supporting an operator's palms.

3. A data processing apparatus according to Claim 1 or Claim 2, wherein said palm rest is pivotally attached to a front wall of the casing.

4. A data processing apparatus according to any one of Claims 1 to 3, said palm rest is rotatable inwardly into a position in which it is held upright and held in contact with an internal wall of the lid when the lid is closed.

5. A palm rest, which is installed into a data processing apparatus having a casing with a keyboard and a lid, the palm rest being pivotally attached to the apparatus for rotation inwardly and outwardly relative to the casing, the palm rest being capable of holding an operator's palms when rotated outward, being covered with said lid when rotated inwards and said lid is closed, and forming a handle when said palm rest is rotated outward and said lid is closed.

6. A palm rest according to Claim 5, having a palm supporting surface which is substantially planar with the keyboard when the palm rest is rotated outwardly into a position for supporting an operator's palms.

7. A palm rest according to Claim 5 or Claim 6, which is hinged onto a front wall of said casing.

8. A palm rest according to any one of Claims 5 to 7, which is rotatable inwardly into a position in which it is held in contact with an internal wall of said lid when said lid is closed.
